# EUROPÄISCHE PATENTSCHRIFT

(11) **EP 2 734 811 B1**
(45) Veröffentlichungstag und Bekanntmachung des Hinweises auf die Patenterteilung: **01.07.2015**
(21) Anmeldenummer: 12710129.3
(22) Anmeldetag: 25.02.2012
(51) Int. Cl.: G01C 21/36, G01C 21/34

(54) **VERFAHREN ZUM UNTERSTÜTZEN EINER PERSON BEIM PLANEN EINER FAHRT MIT EINEM ELEKTROFAHRZEUG UND KRAFTFAHRZEUG MIT EINER NAVIGATIONSEINRICHTUNG**
METHOD FOR ASSISTING A PERSON IN PLANNING A JOURNEY WITH AN ELECTRIC VEHICLE, AND MOTOR VEHICLE HAVING A NAVIGATION DEVICE
PROCÉDÉ VISANT À ASSISTER UNE PERSONNE LORS DE LA PLANIFICATION D'UN DÉPLACEMENT AVEC UN VÉHICULE ÉLECTRIQUE ET UN VÉHICULE À MOTEUR ÉQUIPÉ D'UN SYSTÈME DE NAVIGATION

(30) Priorität: 22.07.2011 DE 102011108381
(43) Veröffentlichungstag der Anmeldung: 28.05.2014
(73) Patentinhaber: Audi AG, 85045 Ingolstadt (DE)
(72) Erfinder: REICH, Andreas, 85114 Buxheim (DE)
(74) Vertreter: Herbst, Matthias Heinz
(86) Internationale Anmeldenummer: PCT/EP2012/000819
(87) Internationale Veröffentlichungsnummer: WO 2013/013729

(56) Entgegenhaltungen:
- US-A- 5 539 399
- US-A1- 2010 094 496

## Beschreibung

Die Erfindung betrifft ein Verfahren zum Unterstützen einer Person beim Planen einer Fahrt mit einem Elektrofahrzeug. Zu der Erfindung gehört auch ein elektrisch antreibbarer Kraftwagen mit einer Navigationseinrichtung.

Ein elektrisch antreibbarer Kraftwagen, hier auch als Elektrofahrzeug bezeichnet, kann zum Betreiben eines elektrischen Antriebsmotors einen als Traktionsbatterie bezeichneten Akkumulator zum Speichern von elektrischer Energie aufweisen. Eine solche Traktionsbatterie kann fest in dem Kraftwagen installiert oder als austauschbares Modul ausgelegt sein. Je nachdem muss dann die Traktionsbatterie zum Aufladen an einer Ladestation für eine bestimmte Zeitdauer mit einer elektrischen Energiequelle gekoppelt werden oder die entladene Traktionsbatterie durch eine geladene ersetzt werden.

Die Strecke, welche ein Elektrofahrzeug mit einer vollständig geladenen Traktionsbatterie zurücklegen kann, ist im Verhältnis zu derjenigen, die ein Kraftwagen mit Verbrennungsmotor und vollem Tank zurückzulegen vermag, verhältnismäßig kurz. Entsprechend muss eine Fahrt sorgfältig geplant sein. Dazu bieten Navigationsgeräte für Kraftfahrzeuge die Möglichkeit, einer Bedienperson in Abhängigkeit von einem vorgegebenen Ziel eine Information darüber bereitzustellen, ob sie dieses Ziel ausgehend von einem derzeitigen Ladezustand der Traktionsbatterie erreicht oder, falls dies nicht der Fall ist, wo sie eine Ladestation zum Aufladen der Traktionsbatterie auf der geplanten Route finden kann. Ein solches Verfahren ist verhältnismäßig einfach zu verwirklichen, da sich ausgehend von einem aktuellen Ort, an dem sich das Fahrzeug gerade befindet, und einem vorgegebenen Zielort das Auffinden einer Route auf der Grundlage eines entsprechenden Optimierungsalgorithmus automatisieren lässt.

Aus der DE 195 19 107 C1 ist dazu eine Fahrroutenratgebereinrichtung für ein Kraftfahrzeug bekannt, welche zum Erreichen eines vorgegebenen Zielortes eine optimale Fahrroute unter Einbeziehung von Ladevorgängen für die Traktionsbatterie auffindet. Nachteilig bei dieser Einrichtung ist, dass der Fahrer gezwungen ist, der von der Einrichtung vorgegebenen Fahrroute auch tatsächlich zu folgen, da er andernfalls das Risiko eingeht, mit seinem Fahrzeug liegen zu bleiben bevor er eine andere Ladestation erreicht.

Aus der EP 1 275 936 B1 ist ein Informationssystem für ein Fahrzeug bekannt, das auf einem Bildschirm eine Straßenkarte anzeigt, auf welcher zusätzlich zu einer empfohlenen Route zu einem vorgegebenen Ziel auch ein Abstecherbereich dargestellt wird, in welchem das Fahrzeug einen Abstecher von der empfohlenen Route machen kann, ohne zusätzlich Energie nachladen zu müssen, bis das Ziel erreicht ist. Bei dem Informationssystem muss der Fahrer aber stets ein Ziel vorgegeben, um herauszufinden, welche Abstecherbereiche abseits der zu dem Ziel führenden Route noch angefahren werden können.

Möchte man eine Fahrt selbstständig planen und dabei zu mehreren ins Auge gefassten Fahrrouten herausfinden, ob auf ihnen eventuell ein Zwischenstopp zum Nachladen der Traktionsbatterie eingeplant werden muss, so ist man gezwungen, jede dieser Fahrrouten in ein Navigationsgerät einzugeben und sich die von diesem angegebenen Ladestationen zu merken. Wenn man während einer Fahrt mehrere mögliche alternative Routen ins Auge fasst, kann dieser Umstand besonders lästig sein.

Aus der US 5,539,399 A ist ein Navigationsgerät bekannt, bei welchem zu einer aktuellen Position eines Fahrzeugs ein erstes Gebiet angezeigt wird, dessen Grenze mit einer in einer Traktionsbatterie des Fahrzeugs verbleibenden Restenergie erreichbar ist. Zusätzlich wird ein daran angrenzendes Gebiet angezeigt, das durch Nachladen der Traktionsbatterie an einer Ladestation innerhalb des ersten Gebiets erreichbar ist. Die beiden Gebiete sind unterschiedlich markiert.

In der US 2010/0094496 A1 ist ein Navigationssystem für ein elektrisch angetriebenes Fahrzeug beschrieben. Das Navigationssystem ermittelt ausgehend von einer aktuellen Position eines Fahrzeugs eine Route zu einem Zielort, indem in rekursiver Weise ausgehend von der aktuellen Position Gebiete ermittelt werden, die mit der in einer Traktionsbatterie des Fahrzeugs gespeicherten Energie abgedeckt werden können, wobei zum Ermitteln des jeweils nachfolgenden Gebiets ein Nachladen von elektrischer Energie an einer Ladestation innerhalb des vorangegangenen Gebiets angenommen wird. Auf einer Anzeige des Kraftwagens wird das Gesamtgebiet angezeigt, das nach dem rekursiven Berechnen der Route zum Ziel befahrbar ist, wenn der Fahrer an den ermittelten Ladestationen auch tatsächlich Energie nachlädt.

Es ist Aufgabe der vorliegenden Erfindung, eine Person beim Planen einer Fahrt mit einem Elektrofahrzeug technisch zu unterstützen.

Die Aufgabe wird durch ein Verfahren gemäß Patentanspruch 1 und durch einen Kraftwagen gemäß Patentanspruch 6 gelöst. Vorteilhafte Weiterbildungen des erfindungsgemäßen Verfahrens sind durch die Unteransprüche gegeben.

Bei dem erfindungsgemäßen Verfahren ist es nicht nötig, zum Planen einer Route ein Fahrziel vorzugeben. Anstelle einer einzelnen Route wird an die Person (z.B. durch ein Navigationsgerät) eine Information zu einem Gesamtgebiet ausgegeben, in welchem die Person Fahrziele mit einem bestimmten Elektrofahrzeug erreichen kann. Beispielsweise kann auf einem Bildschirm eine Straßenkarte angezeigt werden, bei welcher das Gesamtgebiet kenntlich gemacht ist.

Das Gesamtgebiet wird nach dem erfindungsgemäßen Verfahren wie folgt ermittelt. Zunächst wird ein aktueller Ort erfasst. an welchem sich das Elektrofahrzeug befindet. Zu dem aktuellen Ort wird außerdem ein aktueller Ladezustand eines Energiespeichers des Elektrofahrzeugs erfasst. Dabei handelt es sich um denjenigen Energiespeicher, welcher die Energie für einen Antrieb des Elektrofahrzeugs speichert. Zu den aktuellen Informationen über den Ort und den Ladezustand wird dann ein Gebiet ermittelt, dessen Grenze mit dem Elektrofahrzeug von dem aktuellen Ort aus und ausgehend von den aktuellen Ladezustand erreichbar ist, ohne dass Energie nachgeladen werden muss. Dieses Gebiet wird im Folgenden als Ausgangsgebiet bezeichnet. Da es sich hierbei um eine Planung einer Fahrt handelt, kann die Grenze des Ausgangsgebiets natürlich nur voraussichtlich, d.h. unter Annahme einer bestimmten Fahrweise der Person, ermittelt werden. In dem Ausgangsgebiet werden dann Standorte von Ladestationen für das Elektrofahrzeug ermittelt. Die Informationen über die Standorte können beispielsweise einer Datenbank entnommen werden, wie sie Bestandteil eines gängigen Navigationsgeräts ist. Bei den Standorten kann es sich um diejenigen aller Ladestationen des Ausgangsgebiets oder um eine Auswahl davon handeln. Zu jeder der ermittelten Ladestationen wird dann jeweils ein mittelbar erreichbares Gebiet bestimmt. Bei einem solchen handelt es sich wiederum um dasjenige Gebiet, dessen Grenze von der Ladestation aus und ausgehend von einem dort durch Nachladen des Elektrofahrzeugs veränderten Ladezustand erreichbar ist, ohne das noch einmal Energie nachgeladen werden muss. Das Gesamtgebiet, welches der Bedienperson schließlich z.B. angezeigt wird, ist aus dem Ausgangsgebiet und den mittelbar erreichbaren Gebieten gebildet. In rekursiver Weise wird auch zu einer Ladestation in einem mittelbar erreichbaren Gebiet ein weiteres mittelbar erreichbares Gebiet bestimmt. Mit anderen Worten kann dieses weitere mittelbar erreichbaren Gebiet auch Orte umfassen, die von dem aktuellen Ort aus nur über zwei Ladestationen erreichbar sind. Das Gesamtgebiet umfasst dann auch solche weiteren mittelbar erreichbaren Gebiete.

In Bezug auf die angezeigte Straßenkarte sind Zonen in dem Gesamtgebiet markiert. Mittels der Markierung sind dabei bestimmte Informationen kenntlich gemacht, welche die einzelnen Zonen betreffen. Durch die Markierung einer Zone kann angegeben sein, an wie vielen Ladestationen mindestens Energie nachgeladen werden muss, damit diese Zone erreicht werden kann. So ist etwa denkbar, auf der Straßenkarte das Ausgangsgebiet sehr hell darzustellen, die das Ausgangsgebiet umgebenden Zonen, welche durch einmaliges Nachladen erreichbar sind, in einem dunkleren Farbton und die nur durch zweimaliges Nachladen erreichbaren in einem noch dunkleren Farbton darzustellen. Zu beachten ist hier, dass zwischen Gebieten und Zonen unterschieden wird: Während sich die Gebiete notwendigerweise überschneiden, stellen die Zonen separate Teilbereiche dar, in die das Gesamtgebiets unterteilt ist. Jeder Zone ist dabei eine eindeutige Markierung zugeordnet. Liegt ein bestimmter Ort beispielsweise sowohl im Ausgangsgebiet als auch in einem Gebiet, das über eine bestimmte (im Ausgangsgebiet befindliche) Ladestation erreicht werden kann, so wird man diesen Ort natürlich der unmittelbar erreichbaren Zone zuordnen und ihn entsprechend markieren.

Durch die Markierung der Zonen kann als Alternative auch eine Ladestation kenntlich sein, über welche die jeweilige Zone erreichbar ist. Beispielsweise kann auf der Straßenkarte jede Ladestation in einer anderen Farbe dargestellt sein und eine nur über eine bestimmten Ladestation mittelbar erreichbare Zone in derselben Farbe wie die Ladestation. Ist eine bestimmte Zone über mehrere Ladestationen erreichbar, weil etwa das Elektrofahrzeug mehrmals nachgeladen werden muss oder weil die Zone über mehrere Ladestationen erreichbar ist, kann zum Markieren der Zone diejenige Ladestation zugrundegelegt werden, an welcher zum Erreichen der Zone zuletzt Energie nachzuladen ist. Genauso kann diejenige Ladestation herangezogen werden, über welche der kürzeste Weg vom aktuellen Ort in die Zone führt oder über welche die Zone voraussichtlich in der geringsten Zeitdauer erreichbar ist. Um der Person eine möglichst sparsame Fahrweise zu ermöglichen, kann auch diejenige Ladestation zu Grunde gelegt werden, über welche die Zone mit dem geringsten Verbrauch von Energie erreichbar ist.

Durch das erfindungsgemäße Verfahren ergibt sich der Vorteil, dass die Bedienperson nun erkennen kann, welches Gebiet sie insgesamt mit ihrem Elektrofahrzeug erreichen kann, wenn sie dieses an einer oder mehreren Ladestationen auflädt. Die Person ist dann völlig frei in der Wahl ihrer Fahrroute und läuft dennoch nicht Gefahr, unvorhergesehen aufgrund einer leeren Traktionsbatterie mit dem Elektrofahrzeug liegen zu bleiben.

Damit eine Person überblicken kann, wie oft sie das Elektrofahrzeug nachladen muss, um an die Grenze des angezeigten Gesamtgebiets reisen zu können, ist im Zusammenhang mit dem rekursiven Ermitteln weiterer mittelbar erreichbarer Gebiete eine vorteilhafte Weiterbildung des erfindungsgemäßen Verfahrens dadurch gegeben, dass die Person eine Höchstanzahl von Ladestationen vorgibt, über welche die Grenze des Gesamtgebiets erreichbar sein soll. Beispielsweise kann die Person so festlegen, dass sie als. Gesamtgebiet nur denjenigen Bereich dargestellt haben möchte, den sie mit insgesamt drei Ladevorgängen erreichen kann. Dann lässt sich von der Person ein benötigter Zeitaufwand, der für die Nachladevorgänge zu berücksichtigen ist, in die Planung mit einschließen.

Wann immer zu einer bestimmten Ladestation ein mittelbar erreichbares Gebiet bestimmt wird, wird davon ausgegangen, dass das Elektrofahrzeug an der Ladestation mit Energie versorgt wird. Hierbei können unterschiedliche Annahmen zugrunde gelegt werden. Gemäß einer Ausführungsform des erfindungsgemäßen Verfahrens wird davon ausgegangen, dass der Energiespeicher vollständig aufgeladen wird oder, falls es sich um ein Elektrofahrzeug mit auswechselbarem Energiespeicher handelt, dieser durch einen vollständig geladenen Energiespeicher ersetzt wird. Eine andere Ausführungsform des erfindungsgemäßen Verfahrens geht davon aus, dass der Energiespeicher für eine vorbestimmte Zeitdauer mit Energie geladen wird. Bei dieser Variante des Verfahrens kann die Person durch Vorgegeben der Ladedauer ganz einfach festlegen, wie lange sie sich an einer bestimmten Ladestation beispielsweise zum Rasten aufhalten möchte. Eine andere Ausführungsform des erfindungsgemäßen Verfahrens geht davon aus, dass der Energiespeicher an der Ladestation mit Energie zu einem vorbestimmten Gesamtpreis geladen wird. Hierdurch kann die Person in bequemer Weise vorgeben, wie viel Geld sie für einen Streckenabschnitt auszugeben plant. Dies kann sich bei einer Fahrt, die teilweise durch Ballungsräume führt, als vorteilhaft erweisen, da dort der Preis für die Energie an den Ladestationen tendenziell höher ist.

Bei einem bestimmten ermittelten Gebiet, also dem Ausgangsgebiets oder einem mittelbar erreichbaren Gebiets, muss es sich nicht um dasjenige Gebiet handeln, dessen Rand mit dem Elektrofahrzeug unter Verbrauch der gesamten in dem Energiespeicher gespeicherten Energie erreichbar ist. Vielmehr ist es von Vorteil, wenn als die Grenze, durch welche das Gebiet beschrieben ist, diejenige Linie ermittelt wird, die all jene Orte verbindet, an welchen der Ladezustand des Energiespeichers jeweils voraussichtlich ein vorbestimmtes Kriterium erfüllt, wenn man ohne Umwege zu diesem Ort fahren würde. So ist in einer Ausführungsform des erfindungsgemäßen Verfahrens vorgesehen, dass sich ein ermitteltes Gebiete dadurch bestimmt, dass bei Erreichen von dessen Rand der Ladezustand des Energiespeichers auf einen vorbestimmten Wert (z.B. auf zehn Prozent der höchstens in dem Energiespeicher speicherbaren Energiemenge) abgesunken ist. Eine andere, noch mehr Sicherheit bietende Weiterbildung des Verfahrens ergibt sich, wenn als Kriterium für diejenigen Orte, durch welche die Grenze des Gebiets bestimmt ist, zu Grunde gelegt wird, dass bei Erreichen des Ortes noch genug Restenergie in dem Energiespeicher gespeichert sein muss, damit eine dem Ort nächstliegende Ladestation mit dem Elektrofahrzeug unter eigenem Antrieb desselben zu erreichen ist.

Was im Zusammenhang mit dem Ermitteln eines Gebiets die Vorgabe bedeutet, dass der Rand desselben "ohne Umwege" bzw. "auf direktem Wege" erreichbar sein und bei Erreichen desselben dann z.B. noch zehn Prozent der Maximalkapazität verfügbar sein sollen, kann ebenfalls auf unterschiedliche Weise festgelegt sein. So ist hier z.B. möglich, eine möglichst kurze Fahrdauer, eine möglichst energieeffiziente Fahrt oder eine möglichst kurze Strecke zugrunde zu legen.

Eine andere vorteilhafte Weiterbildung des erfindungsgemäßen Verfahrens erleichtert es einer Person, ihre Fahrroute während einer Fahrt spontan umzuplanen. Dies wird erreicht, indem während der Fahrt der aktuelle Ort und der aktuelle Ladezustand wiederholt erfasst werden und dann jeweils das Ausgangsgebiet und die von diesem aus indirekt erreichbaren Gebiete neu ermittelt werden. Die Information zu dem Gesamtgebiet, also z.B. die Anzeige der Straßenkarte, wird dann in Abhängigkeit von den neu ermittelten Gebieten regelmäßig aktualisiert. Verbraucht die Person dann z.B. auf der Fahrt durch häufiges und starkes Beschleunigen mehr Energie als bei der ursprünglichen Ermittlung des Ausgangsgebiets zugrunde gelegt wurde, schrumpft dadurch natürlich das Ausgangsgebiet und es werden eventuell nicht mehr alle Ladestationen (und damit auch nicht die nur über diese mittelbar erreichbaren Gebiete) erreicht. Durch das wiederholte Ermitteln der Grenze des Ausgangsgebiets (und infolgedessen auch des Gesamtgebiets) auf Grundlage des sich während der Fahrt ändernden Ladezustands lässt sich das Elektrofahrzeug auch bei unvorhergesehener Fahrweise der Person weiterhin sehr flexibel navigieren, ohne dass die Gefahr besteht, mit ihm liegen zu bleiben.

Der erfindungsgemäße Kraftwagen ist elektrisch antreibbar. Eine Navigationseinrichtung des Kraftwagens ist dazu ausgebildet, eine Information zu einem Gesamtgebiet auszugeben, das auf der Grundlage einer der beschriebenen Ausführungsformen des erfindungsgemäßen Verfahrens aus einem Ausgangsgebiet sowie aus mittelbar erreichbaren Gebieten gebildet ist, die durch ein- oder gegebenenfalls auch, mehrmaliges Nachladen erreichbar sind. Der erfindungsgemäße Kraftwagen weist des Weiteren eine Einrichtung zum Erfassen des Orts auf, an welchem sich der Kraftwagen befindet, sowie eine Einrichtung zum Erfassen eines Ladezustands eines Energiespeichers für seinen elektrischen Antriebsmotor. Durch diese beiden Einrichtungen lassen sich der aktuelle Ort bzw. der aktuelle Ladezustand erfassen. Die verbleibenden Schritte des erfindungsgemäßen Verfahrens werden durch die Navigationseinrichtung ausgeführt.

Die Erfindung wird im Folgenden anhand eines bevorzugten Ausführungsbeispiels näher erläutert. Dazu zeigt:
Fig. 1 eine schematische Darstellung eines Personenkraftwagens gemäß einer Ausführungsform des erfindungsgemäßen Kraftwagens,
Fig. 2 eine schematische Darstellung einer Anzeige einer Straßenkarte auf einem Bildschirm des Personenkraftwagens von Fig. 1 und
Fig. 3 eine Skizze zu einer Ausführungsform des erfindungsgemäßen Verfahrens, wie sie durch den Personenkraftwagen von Fig. 1 durchgeführt wird.

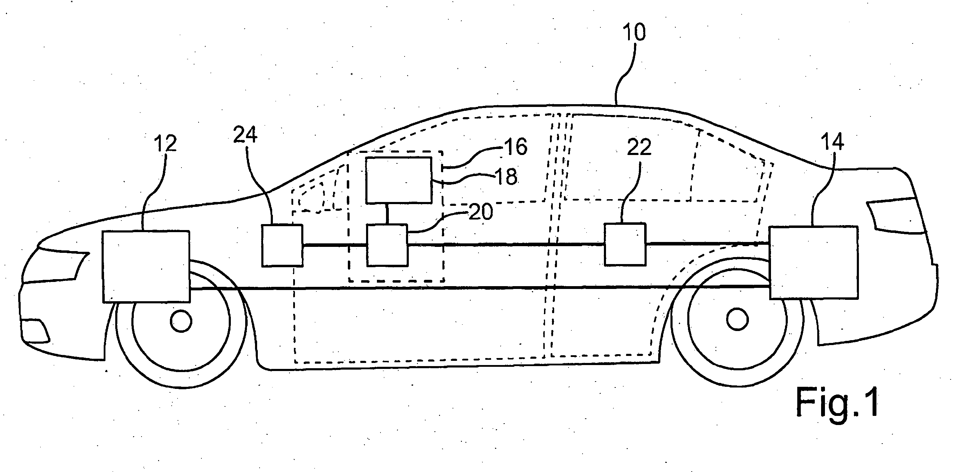

In Fig. 1 ist ein elektrisch antreibbarer Personenkraftwagen 10 gezeigt. Der Personenkraftwagen 10 weist einen Elektromotor 12 zum Antreiben des Personenkraftwagens und eine Traktionsbatterie 14 zum Versorgen des Elektromotors 12 mit elektrischer Energie auf. Für den Fall, dass die Traktionsbatterie 14 vollständig aufgeladen ist, kann ein Fahrer des Personenkraftwagens 10 mit diesem eine Strecke .von ca. 200 km zurücklegen, bevor die in der Traktionsbatterie 14 gespeicherte Energie verbraucht ist. In dem in Fig. 1 gezeigten Beispiel ist die Traktionsbatterie 14 gerade zur Hälfte entleert.

Der Fahrer beabsichtigt eine größere Urlaubsreise mit dem Personenkraftwagen 10. Er plant, während der Fahrt spontan zu Orten zu fahren, die ihm in den Sinn kommen und für die er sich interessiert. Er möchte nun wissen, welche Möglichkeiten ihm offen stehen. Dazu schaltet er ein Navigationsgerät 16 des Personenkraftwagens 10 ein. Der Fahrer gibt über eine (nicht dargestellte) Tastatur in das Navigationsgerät 16 ein, dass er sich an Ladestationen, an welchen er die Traktionsbatterie 14 aufladen kann, höchstens zwanzig Minuten aufhalten möchte, um sich dort auszuruhen, während die Traktionsbatterie 14 aufgeladen wird.

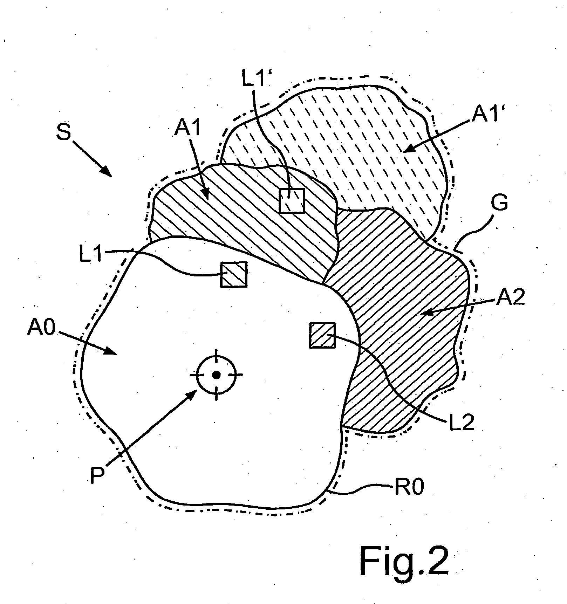

Auf einem Bildschirm 18 des Navigationsgeräts 16 wird daraufhin von einem Steuergerät 20 desselben eine Straßenkarte S angezeigt. Die angezeigte Straßenkarte S ist in Fig. 2 gezeigt, wobei der Übersichtlichkeit halber ein ebenfalls angezeigtes Straßennetz in Fig. 2 nicht dargestellt ist. Auf der Straßenkarte S sind ein aktueller Standort P des Personenkraftwagens 10 sowie eine Zone oder Areal A0 markiert, dessen Rand R0 der Fahrer mit der Energiemenge, die in der halbvollen Traktionsbatterie 14 noch gespeichert ist, erreichen könnte, bevor er eine Ladestation ansteuern muss. In dem Areal A0 sind die Standorte zweier Ladestationen L1 und L2 angezeigt. Zu der Ladestation L1 ist auf der Straßenkarte S eine Zone oder Areal A1 hervorgehoben, welches von dem Fahrer mit dem Personenkraftwagen 10 über das Areal A0 hinaus erreichbar ist, wenn er die Traktionsbatterie 14 an der Ladestation L1 für eine Zeitdauer von zwanzig Minuten auflädt. Entsprechend ist zu der Ladestation L2 ein über diese erreichbares Areal A2 hervorgehoben.

Die beiden Ladestationen L1 und L2 sind auf der Straßenkarte S unterschiedlich markiert. In dem in Fig. 2 gezeigten Beispiel sind dies unterschiedliche Schraffierungen. Es kann sich auch z.B. um unterschiedliche Farben oder unterschiedliche Töne derselben Farbe handeln. Das Areal A1 ist in derselben Weise markiert wie die Ladestation L1, das Areal A2 wie die Ladestation L2. Hieran erkennt der Fahrer, welche Ladestation L1, L2 er zum Erreichen des jeweiligen Areals A1, A2 ansteuern muss. In dem Areal A1 befindet sich eine weitere Ladestation L1', deren Standort ebenfalls auf der Straßenkarte S angezeigt ist. Möchte der Fahrer in ein auf der Straßenkarte S hervorgehobenes Areal A1' reisen, so zeigt ihm die identische Markierung der Ladestation L1' und des Areals A1' an, dass er zuvor die Traktionsbatterie 14 in der Ladestation L1' ein weiteres Mal aufladen muss.

Abhängig von der von dem Fahrer vorgegebenen Bedingung, dass die Ladezeit höchstens zwanzig Minuten dauern darf, ist insgesamt ein Gebiet G für ihn erreichbar. Auf der angezeigten Straßenkarte S sind diejenigen Straßen, die sich außerhalb des Gebiets G befinden, dunkel dargestellt.

Zum Ermitteln des Gebiets G auf der Straßenkarte S hat das Steuergerät 20 eine Information über die noch vorhandene Energiemenge von einer Überwachungseinrichtung 22 für die Traktionsbatterie 14 über einen Kommunikationsbus des Personenkraftwagens 10 empfangen. Das Steuergerät 20 ist des Weiteren mit einem GPS-Empfänger 24 (GPS - Global Positioning System) verbunden, von dem es eine Information über die aktuelle Position P des Personenkraftwagens 10 empfangen hat.

Auf der Grundlage der aktuellen Position P und des aktuellen Ladezustands der Traktionsbatterie 14 wurde durch das Steuergerät 20 unter der Annahme eines bestimmten mittleren Energieverbrauchs pro Streckeneinheit zunächst eine Strecke berechnet, die mit der in der Traktionsbatterie 14 noch vorhandenen Energie von dem Personenkraftwagen 10 zurückgelegt werden kann. Dabei wurde eine Reserve berücksichtigt: Bei Erreichen des Endes der berechneten Strecke wäre die Traktionsbatterie 14 nicht ganz leer, sondern sie wäre lediglich bis auf zehn Prozent ihrer maximalen Ladekapazität entleert. Aus einer (nicht dargestellten) Datenbank des Navigationsgeräts 16 hat das Steuergerät 20 dann all diejenigen Wege entlang von Straßen ermittelt, die bei der aktuellen Position P beginnen und deren Länge der berechneten Strecke entspricht. Durch Verbinden aller derjenigen Orte, an denen jeweils einer der ermittelten Wege endet, hat sich der Rand R0 ergeben.

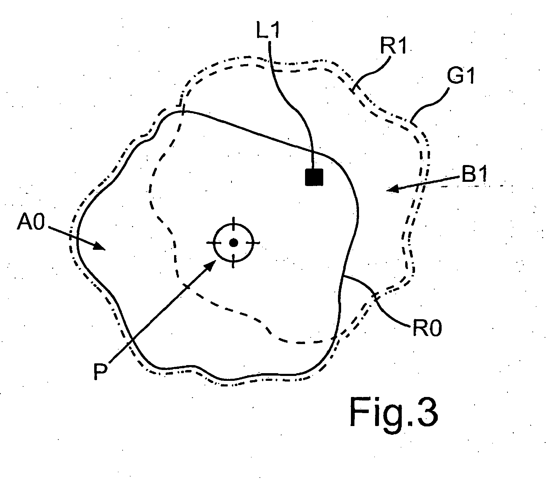

Anhand von Fig. 3 ist im Folgenden erläutert, wie durch das Steuergerät 20 ausgehend von dem Areal A0 das mittelbar erreichbaren Areal A1 ermittelt wurde. In Fig. 3 sind noch einmal der aktuelle Standpunkt P, der Rand R0 und das Areal A0 dargestellt. Hierbei handelt es sich allerdings nicht um die angezeigten Informationen, sondern um Repräsentation derselben durch Daten in einem Speicher des Steuergeräts 20. Aus der Datenbank hat das Steuergerät 20 eine Information darüber ermittelt, dass sich in dem Areal A0 die Ladestation L1 befindet. Ausgehend von der von dem Fahrer vorgegebenen Ladezeit von zwanzig Minuten wurde durch das Steuergerät ein Rand R2 eines Bereichs B1 ermittelt, der von der Ladestation L1 aus nach dem Aufladen über das Straßennetz erreichbar wäre. Derjenige Teil des Bereichs B1, der sich außerhalb des Areals A0 befindet, bildet dann das Areal A1.

Durch Kombinieren des Areals A0 und des Bereichs B1 ergibt sich ein Gesamtbereich G1, von dem aus dann durch das Steuergerät rekursiv weitere Bereiche ermittelt wurden, aus denen sich schließlich das Areal A2 und das Areal A1' ergeben haben.

Für den Fall, dass der Fahrer nun mit dem Personenkraftwagen 10 losfährt, wird auf der auf dem Bildschirm 18 angezeigten Straßenkarte S die aktuelle Position P des Personenkraftwagens 10 durch das Steuergerät 20 ständig entsprechend angepasst. Hierzu empfängt das Steuergerät 20 eine Information über die aktuelle Position P in regelmäßigen Zeitabständen von dem GPS-Empfänger 24. Zusätzlich wird in Abhängigkeit von weiteren Informationen der Überwachungseinrichtung 22 auch das Areal A0 und die von diesem aus erreichbaren Areale neu ermittelt und auf der Straßenkarte S angezeigt.

Dem Fahrer ist so die Möglichkeit gegeben, den Personenkraftwagen 10 unabhängig von einer Zielplanung zu navigieren, ohne dabei zu riskieren, mit dem Personenkraftwagen aufgrund einer leeren Traktionsbatterie 14 liegen zu bleiben.

## Patentansprüche

1. Verfahren zum Unterstützen einer Person beim Planen einer Fahrt mit einem Elektrofahrzeug (10), umfassend die Schritte:
- Erfassen eines aktuellen Orts (P), an welchem sich das Elektrofahrzeug (10) befindet;
- Erfassen eines aktuellen Ladezustands eines Energiespeichers (14) des Elektrofahrzeugs (10), welcher Energie für einen Antriebsmotor (12) des Elektrofahrzeugs (10) speichert;
- Ermitteln eines Ausgangsgebiets (A0), dessen Grenze (R0) mit dem Elektrofahrzeug (10) von dem aktuellen Ort (P) aus und ausgehend von dem aktuellen Ladezustand ohne Nachladen von Energie erreichbar ist;
- Ermitteln von Standorten von Ladestationen (L1, L2) für das Elektrofahrzeug (10) in dem Ausgangsgebiet (A0);
- zu den Ladestationen (L1, L2) jeweils Ermitteln eines mittelbar erreichbaren Gebiets (B1), dessen Grenze (R1) von der jeweiligen Ladestation (L1, L2) aus und ausgehend von einem dort in vorbestimmter Weise veränderten Ladezustand ohne ein weiteres Nachladen erreichbar ist;
- in rekursiver Weise auch zu einer Ladestation (L1') in einem mittelbar erreichbaren Gebiet (B1) Ermitteln eines weiteren mittelbar erreichbaren Gebiets, dessen Grenze von dieser Ladestation aus und ausgehend von einem dort in vorbestimmter Weise veränderten Ladezustand ohne ein weiteres Nachladen erreichbar ist; - Ausgeben einer Information (S) zu einem Gesamtgebiet (G), das aus dem Ausgangsgebiet (A0) und den mittelbar erreichbaren Gebieten (B1) gebildet ist, wobei zum Ausgeben der Information eine Straßenkarte (S) angezeigt wird, bei welcher das Gesamtgebiet (G) kenntlich gemacht ist;
**dadurch gekennzeichnet, dass**
in dem auf der Straßenkarte (S) kenntlich gemachten Gesamtgebiet (G) Zonen (A0, A1, A2, A1') markiert werden und durch die Markierung der Zonen (A0, A1, A2, A1') angezeigt wird:
a) eine Mindestanzahl von Ladestationen, an welchen zum Erreichen der jeweiligen Zone Energie nachgeladen werden muss, oder
b) eine Ladestation (L1, L2, L1'), über welche die jeweilige Zone (A1, A2, A1') erreichbar ist, und, falls die Zone (A1') über mehrere Ladestationen (L1, L1') erreichbar ist, hierbei diejenige Ladestation (L1') zugrunde gelegt wird, an welcher zum Erreichen der Zone (A1, A2, A1') zuletzt Energie nachzuladen ist oder
- über welche der kürzeste Weg vom aktuellen Ort in die Zone führt oder
- über welche die Zone in der geringsten Zeitdauer erreichbar ist oder
- über welche die Zone mit dem geringsten Verbrauch von Energie erreichbar ist.

2. Verfahren nach Anspruch 1, bei welchem von der Person eine Vorgabe für eine Höchstanzahl von Ladestationen (L1, L2, L1') empfangen wird, über welche eine Grenze des Gesamtgebiets (G) erreichbar sein soll.

3. Verfahren nach einem der vorhergehenden Ansprüche, bei welchem zum Ermitteln eines mittelbar erreichbaren Gebiets (B1) zugrunde gelegt wird, dass an der Ladestation, zu welcher dieses Gebiet ermittelt wird,
- der Energiespeicher vollständig aufgeladen wird oder der in dem Elektrofahrzeug befindliche Energiespeicher durch einen vollständig geladenen Energiespeicher ersetzt wird, oder
- der Energiespeicher (14) des Elektrofahrzeugs (10) für eine vorbestimmte Zeitdauer mit Energie geladen wird oder
- der Energiespeicher mit Energie zu einem vorbestimmten Gesamtpreis geladen wird.

4. Verfahren nach einem der vorhergehenden Ansprüche, bei welchem zum Ermitteln der Grenze (R0) des Ausgangsgebiets (A0) und/oder eines mittelbar erreichbaren Gebiets (B1) diejenigen Orte ermittelt werden, an welchen der Ladezustand des Energiespeichers jeweils voraussichtlich ein vorbestimmtes Kriterium erfüllt, wobei das Kriterium insbesondere darin besteht, dass der Ladezustand auf einen vorbestimmten Wert abgesunken ist oder der Energiespeicher bei Erreichen des Ortes noch genug Restenergie gespeichert hat, um damit eine dem Ort nächstliegende Ladestation mit dem Elektrofahrzeug unter Eigenantrieb desselben zu erreichen.

5. Verfahren nach einem der vorhergehenden Ansprüche, bei welchem während einer Fahrt des Elektrofahrzeugs (10) der aktuelle Ort (P) und der aktuelle Ladezustand wiederholt erfasst werden und dann jeweils das Ausgangsgebiet (A0) und die indirekt erreichbaren Gebiete (B1) neu ermittelt werden und die Information (S) in Abhängigkeit von den neu ermittelten Gebieten (A0, B1) aktualisiert wird.

6. Kraftwagen (10) mit
- einer Einrichtung (24) zum Erfassen eines Orts (P), an welchem sich der Kraftwagen (10) befindet,
- einer Einrichtung (22) zum Erfassen eines Ladezustands eines Energiespeichers (14) für einen elektrischen Antriebsmotor (12) des Kraftwagens (10), **dadurch gekennzeichnet dass** der Kraftwagen eine Navigationseinrichtung (16) umfasst, die dazu ausgebildet ist das Verfahren gemäß einem der vorhergehenden Ansprüche durchzuführen und über eine Ausgabeeinrichtung (18) der Navigationseinrichtung (16) eine Information (S) zu einem Gesamtgebiet (G) auszugeben, welches durch Durchführen des Verfahrens gemäß einem der vorhergehenden Ansprüche ermittelt wurde.

## Claims

1. Method for assisting a person with planning a journey in an electric vehicle (10), comprising the steps of:
- detecting a current location (P) at which the electric vehicle (10) is located;
- detecting a current state of charge of an energy storage device (14) of the electric vehicle (10), which device stores energy for a drive motor (12) of the electric vehicle (10);
- determining a starting region (A0), the boundary (R0) of which can be reached by the electric vehicle (10) from the current location (P) and based on the current state of charge without recharging energy;
- determining locations of charging stations (L1, L2) for the electric vehicle (10) in the starting region (A0);
- for each of the charging stations (L1, L2), determining an indirectly reachable region (B1), the boundary (R1) of which can be reached from the respective charging station (L1, L2) and based on a state of charge that was changed at the respective charging station in a predetermined manner, without additional recharging;
- determining, in a recursive manner, also for a charging station (L1') in an indirectly reachable region (B1), an additional indirectly reachable region, the boundary of which can be reached from said charging station and based on a state of charge that was changed at said charging station in a predetermined manner, without additional recharging;
- outputting information (S) for an overall region (G) which is formed by the starting region (A0) and the indirectly reachable regions (B1), for outputting the information, a road map (S) being displayed, on which the overall region (G) is indicated;
**characterised in that**,
in the overall region (G) which is indicated on the road map (S), zones (A0, A1, A2, A1') are marked, the marking of the zones (A0, A1, A2, A1') indicating:
a) a minimum number of charging stations, at which energy must be recharged in order to reach the respective zone, or
b) a charging station (L1, L2, L1') via which the respective zone (A1, A2, A1') can be reached, and, if the zone (A1') can be reached via a plurality of charging stations (L1, L1'), taking as a basis the last charging station (L1') at which energy must be recharged in order to reach the zone (A1, A2, A1'), or
- via which the shortest path leads from the current location to the zone, or
- via which the zone can be reached in the shortest amount of time, or
- via which the zone can be reached with the lowest energy consumption.

2. Method according to claim 1, wherein the person receives a predefined maximum number of charging stations (L1, L2, L1') via which a boundary of the overall region (G) can be reached.

3. Method according to either of the preceding claims, wherein, in order to determine an indirectly reachable region (B1), it is taken as a basis that, at the charging station for which said region is determined:
- the energy storage device is fully charged, or the energy storage device located in the electric vehicle is replaced with a fully charged energy storage device, or
- the energy storage device (14) of the electric vehicle (10) is charged with energy for a predetermined amount of time, or
- the energy storage device is charged with energy according to a predetermined total price.

4. Method according to any of the preceding claims, wherein, in order to determine the boundary (R0) of the starting region (A0) and/or of an indirectly reachable region (B1), the location is determined at which the state of charge of the energy storage device is expected to meet a predetermined criterion, said criterion consisting in particular in the state of charge having dropped to a predetermined value or enough residual energy still being stored in the energy storage device upon reaching the location in order to thereby reach a charging station closest to the location by means of the electric vehicle using its own power.

5. Method according to any of the preceding claims, wherein, during a journey of the electric vehicle (10), the current location (P) and the current state of charge are repeatedly detected, and then the starting region (A0) and the indirectly reachable regions (B1) are each newly determined, and
the information (S) is updated according to the newly determined regions (A0, B1).

6. Motor vehicle (10), comprising:
- a device (24) for detecting a location (P) at which the motor vehicle (10) is located,
- a device (22) for detecting a state of charge of an energy storage device (14) for an electric drive motor (12) of the motor vehicle (10), **characterised in that** the motor vehicle comprises a navigation device (16) which is designed to carry out the method according to any of the preceding claims and to output via an output device (18) of the navigation device (16) information (S) about an overall region (G) which has been determined by carrying out the method according to any of the preceding claims.

## Revendications

1. Procédé d'assistance d'une personne lors de la planification d'un déplacement avec un véhicule électrique (10), comprenant les étapes suivantes :
- la détection d'un endroit actuel (P), dans lequel se trouve le véhicule électrique (10) ;
- la détection d'un état de charge actuel d'un accumulateur d'énergie (14) du véhicule électrique (10) qui accumule de l'énergie pour un moteur de propulsion (12) du véhicule électrique (10) ;
- la détermination d'une zone de départ (A0), dont la limite (R0) peut être atteinte avec le véhicule électrique (10) depuis l'endroit actuel (P) et à partir de l'état de charge actuel sans recharge d'énergie ;
- la détermination de sites de postes de charge (L1, L2) pour le véhicule électrique (10) dans la zone de départ (A0) ;
- pour les postes de charge (L1, L2), respectivement la détermination d'une zone indirectement atteignable (B1), dont la limite (R1) peut être atteinte depuis le poste de charge respectif (L1, L2) et à partir d'un état de charge qui est modifié de manière prédéterminée sans autre recharge ;
- de manière récursive également pour un poste de charge (L1') dans une zone (B1) indirectement atteignable, la détermination d'une autre zone indirectement atteignable, dont la limite est atteignable depuis ce poste de charge et à partir d'un état de charge qui y est modifié de manière prédéterminée sans autre recharge ;
- l'émission d'une information (S) relative à une zone globale (G) qui est formée par la zone de départ (A0) et les zones indirectement atteignables (B1), une carte routière (S) étant affichée pour l'émission de l'information, dans laquelle la zone globale (G) est identifiée ;
**caractérisé en ce que**
des zones (A0, A1, A2, A1') sont marquées dans la zone globale (G) identifiée sur la carte routière (S) et sont affichées par le marquage des zones (A0, A1, A2, A1') ;
a) un nombre minimal de postes de charge, au niveau desquels de l'énergie doit être rechargée pour atteindre la zone respective ou
b) un poste de charge (L1, L2, L1'), par le biais duquel la zone respective (A1, A2, A1') est atteignable et si la zone (A1') est atteignable par le biais de plusieurs postes de charge (L1, L1'), le poste de charge (L1') est pris pour base à cette occasion, au niveau duquel de l'énergie doit enfin être rechargée pour atteindre la zone (A1, A2, A1') ou
- par le biais duquel la course la plus courte mène de l'endroit actuel à la zone ou
- par le biais duquel la zone est atteignable dans la durée la plus petite ou
- par le biais duquel la zone est atteignable avec la consommation la plus faible d'énergie.

2. Procédé selon la revendication 1, pour lequel une prescription pour un nombre maximal de postes de charge (L1; L2, L1') est reçue par la personne, par le biais desquels une limite de la zone globale (G) doit être atteignable.

3. Procédé selon l'une quelconque des revendications précédentes, pour lequel pour la détermination d'une zone indirectement atteignable (B1) il est pris pour base le fait qu'au niveau du poste de charge, par rapport auquel cette zone est déterminée,
- l'accumulateur d'énergie est complètement chargé ou l'accumulateur d'énergie se trouvant dans le véhicule électrique est remplacé par un accumulateur d'énergie complètement chargé ou
- l'accumulateur d'énergie (14) du véhicule électrique (10) est chargé en énergie pour une durée prédéterminée ou
- l'accumulateur d'énergie est chargé en énergie à un prix global prédéterminé.

4. Procédé selon l'une quelconque des revendications précédentes, pour lequel pour la détermination de la limite (R0) de la zone de départ (A0) et/ou d'une zone (B1) indirectement atteignable, les endroits sont déterminés, dans lesquels l'état de charge de l'accumulateur d'énergie remplit respectivement vraisemblablement un critère prédéterminé, le critère consistant en particulier, en ce que l'état de charge est tombé à une valeur prédéterminée ou l'accumulateur d'énergie a accumulé lors de l'atteinte de l'endroit encore suffisamment d'énergie résiduelle afin d'atteindre ainsi le poste de charge le plus proche de l'endroit avec le véhicule électrique sous propre propulsion de celui-ci.

5. Procédé selon l'une quelconque des revendications précédentes, pour lequel pendant un déplacement du véhicule électrique (10), l'endroit actuel (P) et l'état de charge actuel sont détectés de manière répétée puis respectivement la zone de départ (A0) et les zones indirectement atteignables (B1) sont de nouveau déterminées et l'information (S) est actualisée en fonction des zones nouvellement déterminées (A0, B1).

6. Véhicule automobile (10) avec
- un dispositif (24) pour la détection d'un endroit (P), dans lequel se trouve le véhicule automobile (10),
- un dispositif (22) pour la détection d'un état de charge d'un accumulateur d'énergie (14) pour un moteur à propulsion électrique (12) du véhicule automobile (10), **caractérisé en ce que** le véhicule automobile comporte un système de navigation (16) qui est réalisé afin de mettre en oeuvre le procédé selon l'une quelconque des revendications précédentes et d'émettre une information (S) relative à une zone globale (G) par le biais d'un dispositif d'émission (18) du système de navigation (16), laquelle zone globale (G) a été déterminée par la mise en oeuvre du procédé selon l'une quelconque des revendications précédentes.
